# Europäisches Patentamt

## European Patent Office
## Office européen des brevets

(11) Veröffentlichungsnummer: **0 173 672**
**A1**

---

(12) # EUROPÄISCHE PATENTANMELDUNG

(21) Anmeldenummer: 85890175.4

(22) Anmeldetag: 07.08.85

(51) Int. Cl.⁴: **B 21 B 15/00**, B 23 D 36/00

---

(30) Priorität: 29.08.84 AT 2764/84

(43) Veröffentlichungstag der Anmeldung: 05.03.86
Patentblatt 86/10

(84) Benannte Vertragsstaaten: BE CH DE FR GB IT LI LU NL
SE

(71) Anmelder: **VOEST-ALPINE Aktiengesellschaft,
Muldenstrasse 5, A-4020 Linz (AT)**

(72) Erfinder: **Fogel, Reinhold, Dipl.-Ing., Reuchlinstrasse 20,
A-4020 Linz (AT)**
Erfinder: **Freiberger, Hermann, Dipl.-Ing.,
Gleinkergasse 10, A-4400 Steyr (AT)**

(74) Vertreter: **Wolfram, Gustav, Dipl.-Ing.,
Schwindgasse 7 P.O. Box 205, A-1041 Wien (AT)**

---

(54) **Verfahren zum Teilen von aus Knüppeln gewalzten Stabstählen.**

(57) Beim Teilen von aus Knüppeln (1) gewalzten Stabstählen (7) in versandfertige Stäbe (13) mit Verkaufslänge (14) wird jeder Knüppel (1) vorzugsweise gewogen und entsprechend dem Metergewicht des Stabstahles (7) zunächst so in Kühlbettstäbe (7', 7'', 7''' ...) aufgeteilt, dass deren Länge entweder ein ganzzahliges Vielfaches der Verkaufslänge (14) oder grösser oder gleich Nutzlänge ist, wobei weiters nach Durchführung einer Kontrollmessung die noch auszuwalzende Stabstahllänge und daraus das zu erwartende Restende (22) bestimmt wird.

Um das Restende bei voller Auslastung der gesamten Anlage unabhängig von dem vorab gewählten Schnittmuster mit Sicherheit aussortieren zu können, wird die Nutzlänge (21) je für ein ganzes Walzlos festgelegt und nach Vorliegen des Ergebnisses der Korrekturmessung im Fall, dass die Länge des letzten Kühlbettstabes geringer als die Nutzlänge werden würde, das Restende entweder an dem vorletzten Kühlbettstab oder nach dessen Aufteilung an den dem letzten Stab vorhergehenden Kühlbettstäben belassen.

## Verfahren zum Teilen von aus Knüppeln gewalzten Stabstählen

Die Erfindung betrifft ein Verfahren zum Teilen von aus Knüppeln gewalzten Stabstählen in versandfertige Stäbe mit Verkaufslänge, wobei jeder Knüppel vorzugsweise gewogen und entsprechend dem Metergewicht des Stabstahles zunächst so in Kühlbettstäbe aufgeteilt wird, daß deren Länge entweder ein ganzzahliges Vielfaches der Verkaufslänge oder größer oder gleich Nutzlänge ist, und wobei weiters nach Durchführung einer Kontrollmessung die noch auszuwalzende Stabstahllänge und daraus das zu erwartende Restende bestimmt wird.

Ein Verfahren dieser Art ist aus der DE-A - 2 248 177 bekannt. Dabei werden die Stabstähle zwischen der Walzstraße und dem Kühlbett mit einer ersten fliegenden bzw. rotierenden Kühlbettschere in Kühlbettstäbe geschnitten, deren Länge so bemessen ist, daß sie ein ganzzahliges Vielfaches der versandfertigen Stäbe mit Verkaufslänge beträgt und das Kühlbett möglichst gut belegt ist. Je nach Stabstahllänge fällt daher ein Rest mit Unterlänge, nachfolgend Restende genannt, an, d.h. ein Stab, dessen Länge kürzer ist als die der versandfertigen Stäbe mit Verkaufslänge. Um dieses Restende maschinell aussortieren zu können, ist es aus der DE-A - 2 248 177 bekannt, den letzten Kühlbettstab aus einem Knüppel als längsten Kühlbettstab zu bemessen und das Restende an diesem längsten Kühlbettstab zu belassen.

Beim Schneiden der Kühlbettstäbe mit der nach dem Kühlbett angeordneten Kaltschere in versandfertige Stäbe gleicher Verkaufslänge fällt das Restende als letzter Stab an und kann quer zum Rollgang maschinell abgeschoben werden, wodurch verhindert wird, daß der Reststab zu den versandfertigen Stäben gelangt.

Durch eine während des Walzvorganges durchzuführende Kontrollmessung wird gemäß der DE-A - 2 248 177 vor den letzten Teilschnitten die noch zu erwartende Unterlänge, d.h. das Restende, bestimmt und eine Korrektur des vorgewählten Schnittmusters für die Kühlbettstäbe vorgenommen, so daß der letzte aus einem Knüppel stammende Kühlbettstab stets als längster mit sogenannter Nutzlänge bemessen werden kann, zu welchem Zweck je nach Erfordernis die vorangehenden Kühlbettstäbe kürzer bemessen werden.

Dieses bekannte Verfahren hat den Nachteil, daß vorhergehende Kühlbettstäbe unter Umständen so weit verkürzt werden müssen, daß sie die minimale, für das Kühlbett erforderliche Länge nicht mehr aufweisen, wodurch es zu Betriebsstörungen kommt. Damit läßt sich das Verfahren für bestimmte Konstellationen von Knüppelgewicht, Kühlbettlänge, Verkaufslänge, minimaler Länge der Kühlbettstäbe und Metergewicht des Stabstahles nicht mehr anwenden. Es ist aber nicht zielführend, die Kontrollmessung früher durchzuführen, um eine Schnittmusterkorrektur noch vor dem Auswalzen und Schneiden möglichst vieler Kühlbettstäbe durchführen zu können, da durch Kaliberverschleiß, Zunder, Temperaturunterschiede, Walzgerüstauffederung etc. die noch auszuwalzende Stabstahllänge nicht mehr genau genug eruierbar ist. Es besteht daher die Forderung, die Kontrollmessung zur möglichst genauen Festlegung der zu erwartenden Unterlänge des Reststabes zu einem möglichst späten Zeitpunkt durchzuführen.

Insbesondere kommt es bei dem bekannten Verfahren auch dann zu Schwierigkeiten, wenn die Kontrollmessung eine Stabstahllänge ergibt, die von der aus dem Knüppelgewicht vorausberechneten stärker abweicht als vorausgesetzt.

Bei dem bekannten Verfahren werden im allgemeinen die Nutzlängen (das sind die maximalen Vielfachlängen der

0173672

Verkaufslänge, denen die Restenden zugeschlagen werden) für verschiedene Knüppel verschieden lang sein. Da die die Kühlbettstäbe in Verkaufslängen schneidende Kaltschere stets eine Mehrzahl von Kühlbettstäben (das ist eine Kaltscherenlage) gleichzeitig schneidet, kann es jederzeit dazu kommen, daß zwei ungleich lange Stäbe mit Restenden gleichzeitig zur Schere gelangen. Das muß verhindert werden, da ein maschinelles Aussortieren der Reststäbe dann nicht mehr möglich ist; beispielsweise durch Berücksichtigung der Anzahl der gemeinsam von der Kaltschere geschnittenen Kühlbettstäbe bei der Schnittmustererstellung, was sehr aufwendig ist.

Um dies zu verhindern, gibt es alternativ die Möglichkeit, die Anzahl der Kühlbettstäbe, die gleichzeitig von der Kaltschere geschnitten werden, zu verringern, was jedoch zu einer schlechten Auslastung der Kaltschere - und damit auch der vor ihr angeordneten Richtmaschine - führt. Eine schlechte Auslastung der Kaltschere kann weiters zu einem Materialstau beim Walzen führen, so daß die gesamte Anlage nicht mehr optimal ausgelastet ist.

Ein weiteres Verfahren dieser Art ist in der JP-OS 55-137825 beschrieben. Dort wird die Nutzlänge für eine Mehrzahl von Knüppeln gleich groß gewählt. Dadurch entfällt die aufwendige Berücksichtigung der späteren Kaltscherenlagen bzw. die Verkleinerung derselben.

Nachteilig ist jedoch, daß der Reststab zwingend am letzten und damit am längsten Kühlbettstab aus einem Knüppel belassen werden muß, wodurch auch dieses Verfahren bei bestimmten Konstellationen (große Verkaufslängen, große minimale Kühlbettlänge und wenige Kühlbettstäbe aus einem Knüppel) versagen muß.

Da das Verfahren nur von der Walzlängenvorausberechnung

- 4 -

0173672

aus dem Knüppelgewicht ausgeht, führt dessen Anwendung wegen der mangelnden Genauigkeit der Vorhersage immer wieder zu Kühlbettstäben, die den Bedingungen für die vollautomatische Aussortierbarkeit der Restenden nicht genügen.

Die Erfindung bezweckt die Vermeidung dieser Nachteile und Schwierigkeiten und stellt sich die Aufgabe, ein Verfahren der eingangs beschriebenen Art zu schaffen, bei dem das Restende bei voller Auslastung der gesamten Anlage unabhängig von dem vorab gewählten Schnittmuster mit Sicherheit aussortierbar ist.

Diese Aufgabe wird erfindungsgemäß dadurch gelöst, daß die Nutzlänge je für ein ganzes Walzlos festgelegt wird, und daß nach Vorliegen des Ergebnisses der Korrekturmessung im Fall, daß die Länge des letzten Kühlbettstabes geringer als die Nutzlänge werden würde, das Restende entweder an dem vorletzten Kühlbettstab oder nach dessen Aufteilung an den dem letzten Stab vorhergehenden Kühlbettstäben belassen wird.

Das unkorrigierte Schnittmuster sieht vor, daß der letzte Kühlbettstab der längste wird und zusätzlich das Restende bekommt. Wenn die Korrekturmessung ein längeres Restende ankündigt - so lange, daß es noch eine weitere Verkaufslänge enthält - muß diese entweder dem vorhergehenden Kühlbettstab zugeschlagen werden (was nur geht, wenn dieser kürzer als Nutzlänge ist) oder es muß ein "neuer" Kühlbettstab begonnen werden. Dieser läßt sich aber nicht mehr auf Nutzlänge bringen, weil dann der vorhergehende Kühlbettstab kürzer als die minimale Kühlbettlänge werden würde.

Dadurch, daß die mit den Restenden behafteten Kühlbettstäbe für das ganze Walzlos die gleiche Nutzlänge aufwei-

- 5 -

0173672

sen, braucht im Gegensatz zum Stand der Technik nicht darauf geachtet zu werden, ob mehrere mit Restenden behaftete Kühlbettstäbe sich in derselben Scherenlage befinden oder nicht.

Die Maßnahme, den Reststab am vorletzten bzw. den dem letzten Kühlbettstab vorausgehenden Kühlbettstäben zu belassen, macht es möglich, den letzten Kühlbettstab im Gegensatz zum Stand der Technik beliebig kurz zu bemessen. Dieser letzte Kühlbettstab darf nämlich auch kürzer als die minimal zulässige Länge sein, weil diese (wegen der Weiche zwischen Kühlbettschere und Kühlbett) nur für diejenigen Kühlbettstäbe gilt, die vor dem letzten Kühlbettstab (aus einem Knüppel) abgetrennt werden.

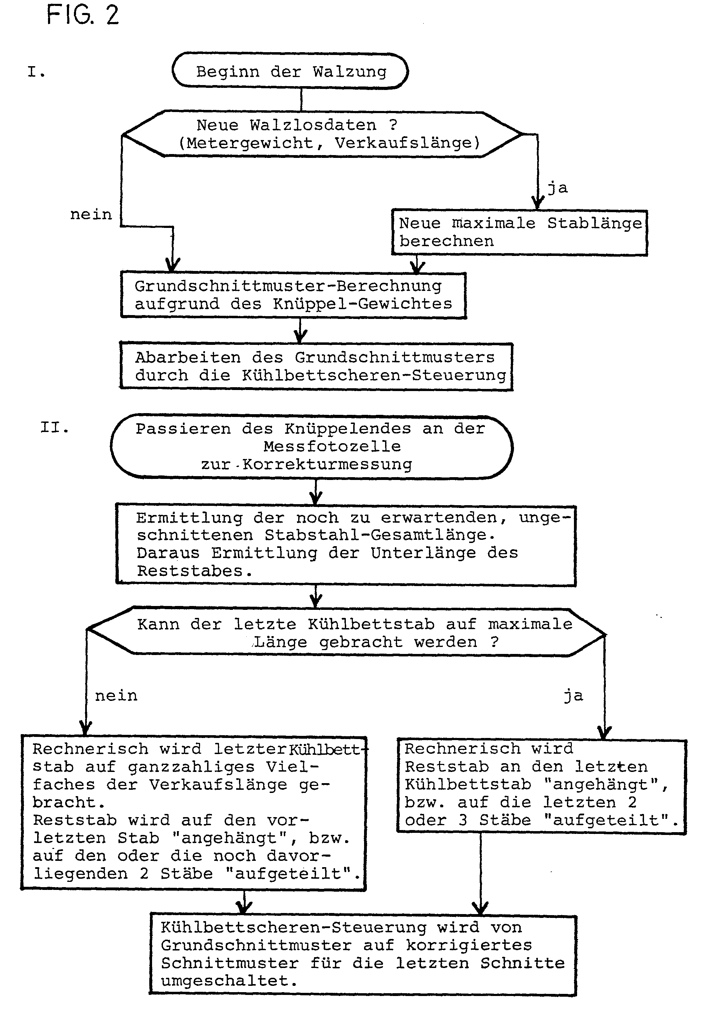

Die Erfindung ist nachfolgend anhand der Zeichnung näher erläutert, wobei Fig. 1 eine schematische Darstellung einer Knüppelwalzanlage mit nachfolgendem Kühlbett in Draufsicht darstellt. Fig. 2 veranschaulicht im Blockschaltbild die Steuerung der Kühlbettschere. Fig. 3 zeigt das Kühlbett mit einer anderen Konstellation der Kühlbettstablängen, die nur durch Anwendung des erfindungsgemäßen Verfahrens erzielbar ist.

Die zu verwalzenden Knüppel 1 werden vor dem Einsatz in dem Ofen 2 auf einer Waage 3 gewogen. Nach Aufwärmung der Knüppel im Ofen 2 werden diese auf einer Vor- 4, Zwischen- 5 und Fertigstraße 6 zu Stabstahl 7 verwalzt. Der Fertigstraße nachgeordnet ist eine fliegende oder rotierende Kühlbettschere 8, die den aus der Fertigstraße 6 kontinuierlich austretenden Stabstahl 7 in Kühlbettstäbe 7', 7" ... teilt. Die so vom Stabstahl 7 abgetrennten Kühlbettstäbe 7', 7" ... werden nach Durchlaufen einer nicht dargestellten Trennweiche in dem der Kühlbettschere nachfolgenden Transportrollgang 9 zeitgerecht vom Transportrollgang 9 abgehoben und gebremst, auf das seitlich ange-

ordnete Kühlbett 10 gehoben und dort taktweise quer zum gegenüberliegenden Ende des Kühlbettes 10 transportiert. Vom Kühlbett 10 gelangen die Kühlbettstäbe 7', 7" ..., gegebenenfalls nach Durchlaufen einer Richtmaschine 11, zu einer Kaltschere 12, wo sie gebündelt in versandfertige Stäbe 13 gleicher Verkaufslänge 14 geschnitten werden. Die gleichzeitig geschnittenen Kühlbettstäbe 7', 7" ... stammen dabei in der Regel aus mehreren Knüppeln 1. Der Kaltschere nachgeordnet ist eine Stapelmaschine 15.

An einer Stelle 16 der Walzstraße 4 bis 6 ist ein Meßdetektor 17 vorgesehen, der vorzugsweise als Fotozelle ausgebildet ist. Sobald das hintere Ende 18 des gerade verwalzten Knüppels 1 den Meßdetektor 17 passiert, wird dieser entlichtet. Das vom Meßdetektor 17 abgegebene Signal wird zur Berechnung der vom letzten Schnittvorgang durch die Kühlbettschere noch zu erwartenden Länge des Stabstahles verwendet. Zu diesem Zweck ist ein Rechner 19, an den die Steuereinrichtung 20 der Kühlbettschere angeschlossen ist und in den auch die Meßergebnisse der Waage eingegeben werden, vorgesehen. Weitere Eingabegrößen in den Rechner 19 sind bei X die Verkaufslängen 14 der versandfertigen Stäbe 13 und bei Y das Metergewicht des Stabstahles 7.

Die Funktion der Einrichtung ist folgende:

Zuerst (also noch bevor zu walzen begonnen wird) wird eine für das gesamte Walzlos gültige Nutzlänge ermittelt. Ein Walzlos ist die Gesamtheit aller Knüppel 1, die zu Stabstählen 7 mit gleichem Metergewicht gewalzt und zu Stäben 13 gleicher Verkaufslänge 14 geschnitten werden.

Sodann wird für jeden einzelnen Knüppel dieses Walzloses anhand der aus dem jeweiligen Knüppelgewicht prognostizierten Gesamtauswalzlänge ein Grundschnittmuster errech-

net, nach welchem der letzte aus einem Knüppel entstehende Kühlbettstab auf Nutzlänge gebracht wird. Das geschieht im allgemeinen dadurch, daß der (bzw. die) erste(n) Kühlbett- stab (bzw. -stäbe) kürzer als die Nutzlänge wird. Von dieser Verkürzung müssen jedoch so viele Kühlbettstäbe ausgenommen bleiben, als später für die Aufteilung des aus der Kontrollmessung errechneten Restendes erforderlich sind. Außerdem kann die Verkürzung der ersten zu schnei- denden Kühlbettstäbe nur bis zur maschinentechnisch be- dingten Minimallänge erfolgen.

Bei der Grundschnittmusterberechnung ist weiters zu be- achten, daß zur Kaltschere 12 nur Kühlbettstäbe 7', 7" .. gelangen dürfen, deren Längen 21', 21" - soferne sie kür- zer als die Nutzlänge sind - immer ganzzahlige Vielfache der Verkaufslängen 14 sind.

Die Schopfreserven, die wegen der von der Kühlbettschere 8 verursachten gebogenen Enden der Kühlbettstäbe 7', 7" ... vorgesehen sind, sind übrigens so kurz bemessen, daß sie nach dem Schnitt selbsttätig in eine Schrottgrube fallen.

Nachdem für einen Knüppel in der oben beschriebenen Weise das Grundschnittmuster festgelegt ist, wird es über die Steuerung der Kühlbettschere 8 so lange abgearbeitet, bis das Knüppelende 18 den Meßdetektor 17 passiert. In diesem Augenblick wird mit Hilfe des vom Meßdetektor 17 dem Rechner 19 eingegebenen Signales die noch zu erwartende ungeschnittene Stabstahllänge und daraus wieder die Länge 24 des zu erwartenden Restendes 22 errechnet.

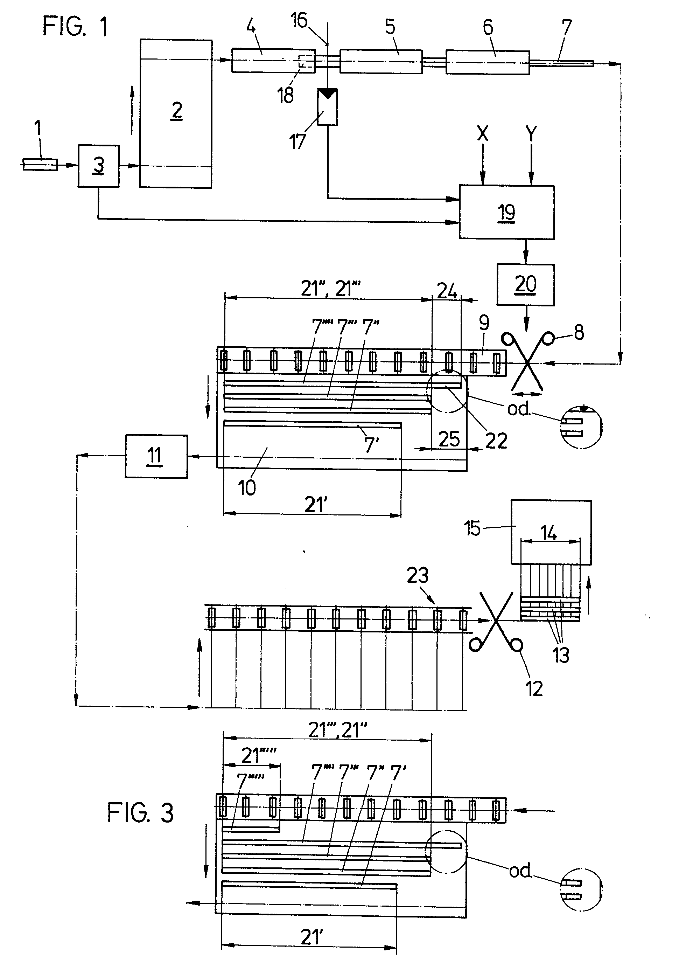

Der Rechner versucht nun, das vorausberechnete Restende 22 dem letzten Kühlbettstab (bzw. den letzten Kühlbettstäben) mit Nutzlänge zuzuschlagen. Das ergibt die in Fig. 1 dargestellte Konstellation am Kühlbett.

Die Kaltschere 12 kann dann die in der Nutzlänge enthaltene Anzahl der Verkaufslängen 14 von den um die Restenden 22 verlängerten Kühlbettstäben 7"' abtrennen. Diese abgetrennten Restenden werden dann gesammelt und maschinell mittels einer nicht dargestellten Abschiebeeinrichtung vom Rollgang 23 der Kaltschere entfernt (oder von der Kaltschere zu Kleinschrott zerteilt und wie die Schopfreserven in die Schrottgrube befördert). Dadurch wird verhindert, daß die Restenden 22 zu den versandfertigen Stäben 13 gelangen und mit diesen vermischt werden.

Gelingt es nicht, das Restende 22 am letzten Kühlbettstab 7"" zu belassen, wird das Schnittmuster für den jeweiligen Knüppel korrigiert, indem das Restende 22 dem vorletzten Kühlbettstab zugeschlagen bzw. zwischen vorletztem und vorvorletztem Kühlbettstab aufgeteilt wird (siehe Fig. 3). Der letzte Kühlbettstab kann dann kürzer sein als die vorhergehenden von diesem Knüppel stammenden Kühlbettstäbe, wobei auf die Einhaltung einer minimalen Länge dieses Kühlbettstabes nicht geachtet werden muß, da es sich um den letzten Kühlbettstab eines Knüppels handelt und zwischen diesem und dem ersten Kühlbettstab des nachfolgend gewalzten Knüppels eine gewisse Distanz vorhanden ist. Der letzte Kühlbettstab muß lediglich mindestens so lange sein wie die einfache Verkaufslänge 14 oder ein ganzzahliges Vielfaches der Verkaufslänge.

Wenn nach der Messung mit dem Detektor 17 mit Sicherheit noch zwei oder drei Schnitte der Kühlbettschere möglich sind, wird das Restende 22 auf zwei oder drei Kühlbettstäbe aufgeteilt. Das hat den Vorteil, daß das Kühlbett 10 durch die Kühlbettstäbe nahezu vollständig ausgenützt wird, d.h. zwischen den Enden der Kühlbettstäbe und dem Kühlbettende ist nur mehr eine Distanz 25 vorhanden, die der Hälfte oder einem Drittel der Verkaufslänge 14 entspricht.

0173672

Das erfindungsgemäße Verfahren bietet weiters den Vorteil, daß mit der Kaltschere 12 bei einem Schnitt mehrere mit Restenden 22 behaftete Kühlbettstäbe, die von mehreren Knüppeln stammen, gleichzeitig geschnitten werden können, ohne daß die Gefahr besteht, daß ein Restende 22 zu den versandfertig geschnittenen Stäben 13 gelangt. Die Kaltschere kann somit immer voll belegt werden und daher auch keinen Engpaß bilden.

Durch die Möglichkeit, das Restende 22 am vorletzten Kühlbettstab zu belassen bzw. auf den vorletzten und vorvorletzten Kühlbettstab aufzuteilen, gelingt es auf jeden Fall, das Restende an Kühlbettstäbe mit Nutzlänge anzuhängen. Der letzte Kühlbettstab aus einem Knüppel kann, wie gesagt - soferne seine Länge nur ein ganzzahliges Vielfaches der Verkaufslänge 14 ist - beliebig kurz sein.

Dabei wird aus Sicherheitsgründen ein bestimmter Längenzuschlag vorgesehen, da die Länge 24 des Restendes 22 ja nicht gemessen, sondern nur errechnet ist und daher geringfügig von dem errechneten Wert abweichen kann. Um diesen geringfügigen Längenzuschlag zu vermeiden, kann man fakultativ bereits bei der Grundmusterberechnung versuchen, dem letzten Kühlbettstab Nutzlänge zu geben.

Um optimal arbeiten zu können, wird der Standort 16 des Meßdetektors 17 an der Walzstraße 4, 5, 6 so gewählt, daß für möglichst alle zu walzenden Stabstahldimensionen nach erfolgter Messung noch mindestens zwei Schnitte der Kühlbettschere 8 möglich sind. Für die grundsätzliche Funktion der Restenden-Ausscheidung ist es jedoch ausreichend, wenn mit Sicherheit ein Schnitt zur Verfügung steht.

Das erfindungsgemäße Verfahren läßt sich im Gegensatz zum Stand der Technik auch dann anwenden, wenn das Knüppelgewicht nicht bekannt ist. In diesem Fall wird ein Grund-

schnittmuster erstellt, gemäß dem nur Kühlstäbe 7', 7" ...
mit Nutzlänge vom gewalzten Stabstahl 7 abgeschnitten
werden, bis der Meßdetektor 17 anspricht. Nach Durchführung der Kontrollmessung wird wieder die Länge 24 des Restendes 22 bestimmt, und das Restende 22 entweder am letzten Kühlbettstab belassen (nämlich wenn dieser Nutzlänge hat, in diesem Fall also ebenso lang ist wie die vorhergehenden) oder er wird - was in diesem Fall wahrscheinlicher ist - am vorhergehenden Kühlbettstab belassen (nämlich wenn der letzte Kühlbettstab kürzer als die vorhergehenden ist).

Beim Walzen von Stabstahl mit großem Querschnitt kann es bei Zugrundelegung einer bestimmten Nutzlänge vorkommen, daß die letzten Kühlbettstäbe eines Knüppels sehr kurz geraten und die Grundschnittmusterberechnung zu stark unterschiedlichen Kühlbettstablängen führt. In diesem Fall wird bei der Schnittmusterberechnung die Nutzlänge kürzer gewählt. Das jedoch nur so weit, daß sich bei maximal möglicher Auswalzlänge der Knüppel die Anzahl der Kühlbettstäbe aus einem solchen Knüppel nicht erhöht. Die solcherart in ihrer Länge vergleichmäßigten Kühlbettstäbe bewirken eine bessere Ausnutzung der nachfolgenden Adjustage, ohne die Kühlbettbelegung wesentlich zu verschlechtern. Die gleichmäßig langen Kühlbettstäbe ergeben auch günstigere thermische Bedingungen beim Abkühlen am Kühlbett.

0173672

Patentanspruch:

Verfahren zum Teilen von aus Knüppeln (1) gewalzten Stabstählen (7) in versandfertige Stäbe (13) mit Verkaufslänge (14), wobei jeder Knüppel (1) vorzugsweise gewogen und entsprechend dem Metergewicht des Stabstahles (7) zunächst so in Kühlbettstäbe (7', 7", 7"'...) aufgeteilt wird, daß deren Länge entweder ein ganzzahliges Vielfaches der Verkaufslänge (14) oder größer oder gleich Nutzlänge ist, und wobei weiters nach Durchführung einer Kontrollmessung die noch auszuwalzende Stabstahllänge und daraus das zu erwartende Restende (22) bestimmt wird, dadurch gekennzeichnet, daß die Nutzlänge (21) je für ein ganzes Walzlos festgelegt wird, und daß nach Vorliegen des Ergebnisses der Korrekturmessung im Fall, daß die Länge des letzten Kühlbettstabes geringer als die Nutzlänge werden würde, das Restende entweder an dem vorletzten Kühlbettstab oder nach dessen Aufteilung an den dem letzten Stab vorhergehenden Kühlbettstäben belassen wird.

FIG. 1

FIG. 3

2/2

0173672

FIG. 2

I.

Beginn der Walzung

Neue Walzlosdaten ?
(Metergewicht, Verkaufslänge)

nein

ja

Neue maximale Stablänge
berechnen

Grundschnittmuster-Berechnung
aufgrund des Knüppel-Gewichtes

Abarbeiten des Grundschnittmusters
durch die Kühlbettscheren-Steuerung

II.

Passieren des Knüppelendes an der
Messfotozelle
zur Korrekturmessung

Ermittlung der noch zu erwartenden, ungeschnittenen Stabstahl-Gesamtlänge.
Daraus Ermittlung der Unterlänge des
Reststabes.

Kann der letzte Kühlbettstab auf maximale
Länge gebracht werden ?

nein

ja

Rechnerisch wird letzter Kühlbettstab auf ganzzahliges Vielfaches der Verkaufslänge gebracht.
Reststab wird auf den vorletzten Stab "angehängt", bzw.
auf den oder die noch davorliegenden 2 Stäbe "aufgeteilt".

Rechnerisch wird
Reststab an den letzten
Kühlbettstab "angehängt",
bzw. auf die letzten 2
oder 3 Stäbe "aufgeteilt".

Kühlbettscheren-Steuerung wird von
Grundschnittmuster auf korrigiertes
Schnittmuster für die letzten Schnitte
umgeschaltet.

## Europäisches Patentamt

# EUROPÄISCHER RECHERCHENBERICHT

| EINSCHLÄGIGE DOKUMENTE | | | EP 85890175.4 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl. 4)** |
| A | <u>DD - A - 87 668</u> (BRANDT)<br>  * Gesamt *<br><br>  -- | | B 21 B 15/00<br>B 23 D 36/00 |
| A | PATENT ABSTRACTS OF JAPAN, unexamined applications, Sektion M, Band 5, Nr. 6, 16. Jänner 1981<br>THE PATENT OFFICE JAPANESE GOVERNMENT<br>Seite 16 M 50<br><br>  * Kokai-Nr. 55-137 825<br>    (KAWASAKI SEITETSU K.K.) *<br><br>  -- | | |
| A | <u>US - A - 3 174 316</u> (SIGAL)<br>  * Gesamt *<br><br>  ---- | | |

**RECHERCHIERTE SACHGEBIETE (Int. Cl. 4)**

B 21 B 15/00
B 21 B 37/00
B 21 C 51/00
B 23 D 36/00
G 01 B  7/00

Der vorliegende Recherchenbericht wurde für alle Patentansprüche erstellt.

| **Recherchenort** | **Abschlußdatum der Recherche** | **Prüfer** |
|---|---|---|
| WIEN | 27-11-1985 | TROJAN |